(19) Europäisches Patentamt
European Patent Office
Office européen des brevets

(11) EP 2 810 988 A1

(12) **EUROPEAN PATENT APPLICATION**
published in accordance with Art. 153(4) EPC

(43) Date of publication:
**10.12.2014 Bulletin 2014/50**

(21) Application number: **13744181.2**

(22) Date of filing: **25.01.2013**

(51) Int Cl.:
***C08L 67/02*** *(2006.01)* ***C08G 63/183*** *(2006.01)*
***C08L 71/02*** *(2006.01)* ***D01F 6/84*** *(2006.01)*

(86) International application number:
**PCT/JP2013/051585**

(87) International publication number:
**WO 2013/115096 (08.08.2013 Gazette 2013/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.01.2012 JP 2012016543**
**16.05.2012 JP 2012112193**

(71) Applicant: **Toray Industries, Inc.**
**Tokyo 103-8666 (JP)**

(72) Inventors:
- **KOMATSU, Hirokazu**
**Mishima-shi**
**Shizuoka 411-8652 (JP)**
- **MATSUMI, Daisuke**
**Mishima-shi**
**Shizuoka 411-8652 (JP)**
- **YOSHIMIYA, Takayuki**
**Mishima-shi**
**Shizuoka 411-8652 (JP)**

(74) Representative: **Kador & Partner**
**Corneliusstraße 15**
**80469 München (DE)**

(54) **POLYESTER COMPOSITION HAVING DYEABILITY AT ATMOSPHERIC PRESSURE, METHOD FOR PRODUCING SAME, FIBERS COMPRISING SAME AND MOLDED ARTICLE COMPRISING SAME**

(57) Provided are: a polyester composition which balances structural stability with dyeability of disperse dyes at less than 100°C when made into fibers; and a method for producing said polyester composition. This polyester composition having dyeability at atmospheric pressure: contains components comprising dicarboxylic acid, a diol and polyethylene glycol, with the main repeating components comprising ethylene terephthalate; and is characterized in that 5-10 mol% of the total diol component has three carbon chains with side chains, the content of polyethylene glycol in the polyester composition is 2-4 wt%, and the content of cyclic dimers is not more than 0.35 wt%.

EP 2 810 988 A1

Printed by Jouve, 75001 PARIS (FR)

## Description

### Technical Field

The present invention relates to a polyester composition dyeable with a disperse dye at atmospheric pressure and a production method therefor. More specifically, it relates to a polyester composition dyeable with a disperse dye at atmospheric pressure which, when made into fibers, balances structural stability with dyeability with disperse dyes at less than 100 ° C, as well as a production method therefor.

### Background Art

Polyester compositions are used for diverse purposes because of their high functionality. Examples include clothing, materials and medical. Of all polyester compositions, polyethylene terephthalate is particularly advantageously used as it is excellent in versatility and practical applicability.

When polyethylene terephthalate is made into clothing fibers, it is structurally unamenable to dyeing, unless, for instance, it is heated to 130°C after the dyeing vessel is pressurized.

In recent years, there have been growing calls for the use of polyethylene terephthalate as composite fibers in conjunction with other synthetic fibers, such as nylon and polyurethane, or naturally occurring fibers, such as wool and cotton, but if such composite fibers are dyed at dyeing temperatures of 100°C or more, quality degradations in the form of reduced strength, soiling of other fiber materials and the like occur. If, on the other hand, composite fibers are dyed at reduced dyeing temperatures (below 100°C, e.g. 93°C to 98°C) so as not to degrade quality of other fiber materials, the dyeability of polyethylene terephthalate is diminished, thus presenting a new problem, even though the soiling of other fabric materials is reduced.

To solve such problems, modification of polyethylene terephthalate has been studied for some time.

To make dyeing easier, for instance, a polyester composition production method based on a modified polyester composition obtained by copolymerizing 3 to 10 wt% of polyethylene glycol with a number average molecular weight of 600 to 4000 and introducing a hindered phenolic antioxidant aimed at improving the oxidative degradability of polyethylene glycol has been proposed (patent document 1). However, since this method involves the copolymerization of a large amount of polyethylene glycol, there is a problem in that the molecular structure of formed articles is unstable, so much so that, in the case of fibers, for instance, the dry thermal shrinkage rate, delayed shrinkage rate and the like are large, leading to an inferior commercial value. The copolymerization of a large amount of polyethylene glycol, which is aimed at realizing dyeability with disperse dyes at atmospheric pressure, also leads to a reduction in the strength of formed articles. To minimize such a reduction in strength, its combined use with a hindered phenolic antioxidant is necessary, but a hindered phenolic antioxidant itself poses a problem in that it brings about a structural change upon, for example, exposure to ultraviolet light, leading to a yellowing of formed articles.

As a polyester fiber with improved dyeability, stretchability and strength, a polyester copolymer obtained through a condensation polymerization reaction involving a mixture of para-phthalic acid and a C2 to C6 alkylene glycol, as well as 1 to 15 mol% of 2-methyl-1,3-propanediol added to it, has been proposed, together with fiber products thereof (patent document 2). With this method, therefore, it is pivotal to perform a copolymerization with some 12 mol% of 2-methyl-1,3-propanediol to obtain sufficient dyeability below 100°C. However, a copolymerization with 12 mol% of 2-methyl-1,3-propanediol poses problems such as a lack of stability in the fiber structure, making it impossible to simultaneously achieve a reduction in dyeing temperature and stabilization of the fiber structure. There is also a problem in that, given the closeness of the boiling point of 2-methyl-1,3-propanediol, which is 212°C, and that of a C2 to C6 alkylene glycol (for instance, the boiling point of a C2 ethylene glycol is 197°C), the amount of copolymerized 2-methyl-1,3-propanediol present in the polyester composition does not stabilize due to the evaporation of both a C2-C6 alkylene glycol and 2-methyl-1,3-propanediol during the condensation polymerization reaction, leading to a tendency for the quality of obtained fibers to vary.

Moreover, as a polyester composition excellent in low temperature dyeability, a modified polyester fiber obtained by having an alkoxylated 2-methyl-1,3-propanediol, alkylene glycol and terephthalic acid or an alkyl ester thereof, undergo a condensation polymerization reaction has been proposed (patent document 3). As such, this method requires a copolymerization of some 10 mol% of an alkoxylated 2-methyl-1,3-propanediol to obtain sufficient dyeability at dyeing temperatures of less than 100°C. However, a copolymerization with 10 mol% or more of an alkoxylated 2-methyl-1,3-propanediol gives rise to problems such as a lack of stability in the obtained fiber structure, making it impossible to simultaneously achieve a reduction in dyeing temperature and a stabilization of the fiber structure.

Namely, in the background art, a polyester composition dyeable with a disperse dye at atmospheric pressure which simultaneously achieves dyeability with disperse dyes at less than 100°C and structural stability when processed into fibers is yet to be developed.

Prior Art Documents

Patent Documents

Patent document 1: Japanese Unexamined Patent Publication (Kokai) No. HEI-2-38421, Official Gazette (Claims)
Patent document 2: Japanese Unexamined Patent Publication (Kokai) No. HEI-11-350251, Official Gazette (Claims)
Patent document 3: Japanese Unexamined Patent Publication (Kokai) No. 2004-277987, Official Gazette (Claims)

Summary of the Invention

Problems to Be Solved by the Invention

The problem to be solved by the present invention is to provide a polyester composition dyeable with a disperse dye at atmospheric pressure and a production method therefor which allow to balance the structural stability of a polyester composition with its disperse dye dyeability at less than 100°C when made into fibers.

Means of Solving the Problems

The means of solving the above problem are a polyester composition dyeable with a disperse dye at atmospheric pressure and a production method therefor. The polyester composition dyeable with a disperse dye at atmospheric pressure according to the present invention comprises a polyester containing a dicarboxylic acid, diol and polyethylene glycol and contains ethylene terephthalate as main repeating component, characterize in that the polyester contains a diol component containing three carbon chains and having a side chain, the diol component accounting for 5 to 10 mol% of the total diol content, and that the content of the polyethylene glycol and the content of cyclic dimers are 2 to 4 wt% and 0.35 wt% or less, respectively, in the polyester composition.

The production method for the polyester composition dyeable with a disperse dye at atmospheric pressure according to the present invention comprises a step for producing a polyester by condensation polymerization of a dicarboxylic acid or an ester-forming derivative thereof and a diol or an ester-forming derivative thereof in the presence of a condensation polymerization catalyst, characterized in that the diol component containing three carbon chains and having a side chain is added prior to the commencement of the ester reaction so as to account for 5 to 10 mol% of the total diol quantity in the polyester and that the polyethylene glycol is added so as to account for 2 to 4 wt% of the polyester composition.

Effect of the Invention

The polyester composition dyeable with a disperse dye at atmospheric pressure according to the present invention is excellent in disperse dye dyeability at less than 100°C and structural stability when made into fibers. It makes it possible to lower the dyeing temperature without the need for compression dyeing, keeps the quality of any other materials used in combination intact, and reduces carbon dioxide emissions and energy use during dyeing.

The production method for the polyester composition dyeable with a disperse dye at atmospheric pressure according to the present invention is capable of efficiently producing the polyester composition dyeable with a disperse dye at atmospheric pressure described above.

Description of Embodiments

The polyester composition dyeable with a disperse dye at atmospheric pressure according to the present invention contains a polyester as its main component. This polyester contains the components of a dicarboxylic acid, diol and polyethylene glycol and is obtained by having a dicarboxylic acid or an ester derivative thereof, a diol or an ester derivative thereof, and polyethylene glycol undergo an esterification reaction or ester exchange reaction. The polyester composition dyeable with a disperse dye at atmospheric pressure contains the above polyester, non-copolymerized polyethylene glycol, and arbitrarily cyclic dimers generated as byproducts. A disperse dye may also be blended as desired.

The polyester that forms part of the polyester composition dyeable with a disperse dye at atmospheric pressure according to the present invention has ethylene terephthalate as its main repeating unit. The ethylene terephthalate content is preferably 70 mol% or more, more preferably 80 mol% or more, of the overall repeating unit.

For the polyester composition dyeable with a disperse dye at atmospheric pressure according to the present

invention to simultaneously achieve structural stability when processed into fibers and atmospheric-pressure dyeability with disperse dyes at less than 100°C, it is essential that its polyester contain a diol component containing three carbon chains and having a side chain by 5 to 10 mol% of the total diol component and that it contain polyethylene glycol by 2 to 4 wt% and keep its content of cyclic dimers generated as byproducts during polymerization at 0.35 wt% or less of the 100 wt% of the polyester composition as a whole. If one or more out of the diol component containing three carbon chains and having a side chain, polyethylene glycol and cyclic dimers fall outside the above ranges, dyeability with disperse dyes at less than 100°C and fiber structural stability cannot simultaneously be achieved. Preferably, the content of the diol component containing three carbon chains and having a side chain is 7 to 9 mol% of the total diol component, while the content of polyethylene glycol and that of the cyclic dimers are 2.5 to 3.5 wt% and 0.30 wt% or less, respectively, of the polyester composition. In this regard, the content of polyethylene glycol refers to the combined total of the ethylene glycol components copolymerized and non-copolymerized with the polyester.

Such part of the polyethylene glycol contained in the polyester composition dyeable with a disperse dye at atmospheric pressure according to the present invention as to be copolymerized into the polyester exhibits characteristics such that it destabilizes the molecular chain structure when the polyester composition is processed into fibers as it retains rubber elasticity even after copolymerization, while delivering excellent dyeability with disperse dyes at atmospheric pressure. Along with polyethylene glycol, therefore, the present invention copolymerizes a diol component containing three carbon chains and having a side chain and lets the side chain suitably control the rubber elasticity of polyethylene glycols. This, in turn, stabilizes the structure when the polyester composition is processed into fibers and further enhances the characteristic of polyethylene glycol to deliver excellent dyeability. Namely, by copolymerizing both polyethylene glycol and a diol component containing three carbon chains and having a side chain into polyethylene terephthalate, the present invention succeeds in simultaneously achieving structural stability when the polyester composition is processed into fibers and dyeability with disperse dyes at atmospheric pressure, a feat never before accomplished. In this regard, not all of the polyethylene glycol has, as described above, to be copolymerized.

Under the present invention, examples of a diol component having three carbon chains include of 1,3-propanediol and an ethylene oxide adduct of 1,3-propanediol. Examples of a side chain, on the other hand, include an alkyl group with a carbon number of I to 6, phenyl group and aryl group. Examples of a diol component containing three carbon chains and having a side chain include 2-methyl-1,3-propanediol, 2,2-dimethyl-1,3-propanediol, 2-ethyl-1,3-propanediol, 2-propyl-1,3-propanediol, 2-phenyl-1,3-propanediol, and an ethylene oxide adduct of 2-methyl-1,3-propanediol. If the steric hindrance of the side chain portion of the diol component containing three carbon chains and having a side chain is too large, its advantageous effect on dyeability and fiber structural stability diminishes. For this reason, 2-methyl-1,3-propanediol or an ethylene oxide adduct of 2-methyl-1,3-propanediol whose side chain portion contains a methyl group is preferable. Using such a diol component containing three carbon chains and having a methyl group makes it easier for the synergy effect of copolymerizing both the diol component and polyethylene glycol to manifest.

Though there are no specific limitations on the number average molecular weight of the polyethylene glycol forming part of the polyester composition dyeable with a disperse dye at atmospheric pressure according to the present invention, it may preferably be 400 to 4000. More preferably, the number average molecular weight of polyethylene glycol may be 600 to 2000 as the smaller the molecular weight the easier it is to stabilize the fiber structure.

The polyester composition dyeable with a disperse dye at atmospheric pressure according to the present invention should contain cyclic dimers by 0.35 wt% or less of the 100 wt% of the polyester composition as a whole. Keeping the amount of the cyclic dimers at 0.35 wt% or less makes the polyester composition exhibit excellent structural stability when made into fibers. It is preferable that the cyclic dimer content be 0.30 wt% or less.

Under the present invention, the structure of the cyclic dimers is expressed by chemical formula (1) below.

[Chemical formula 1]

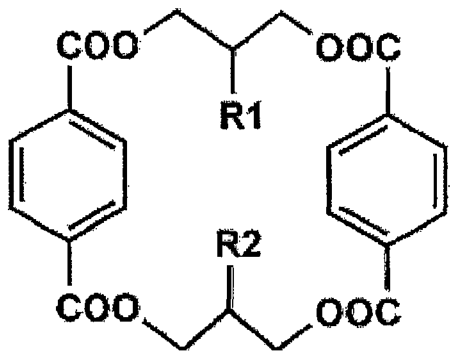

... (1)

(Here, R1 and R2 are a hydrocarbon group with a carbon number of 1 to 6, phenyl group or aryl group.)

In the case of a diol component containing three carbon chains and having a side chain being, for instance, 2-methyl-1,3-propanediol or an ethylene oxide adduct of 2-methyl-1,3-propanediol, the cyclic dimers are expressed by chemical formula (2) below.

[Chemical formula 2]

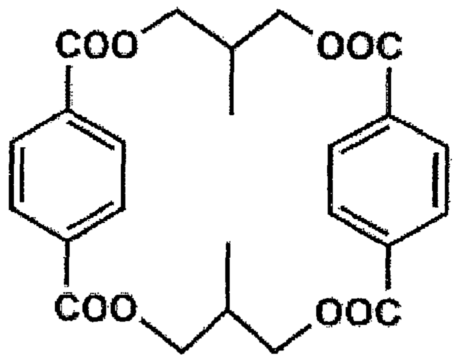

... (2)

It is preferable that the polymer viscosity of the polyester composition dyeable with a disperse dye at atmospheric pressure according to the present invention (viscosity as measured with o-chlorophenol at 25°C in accordance with JIS K7367) be 0.6 to 0.8, more preferably 0.65 to 0.75, as it makes stable spinning possible.

It is preferable that the b value of the polyester composition dyeable with a disperse dye at atmospheric pressure according to the present invention (a Hunter b value as measured by color-difference meter) be 8.0 or less, more preferably 7.0 or less.

The production method for the polyester composition dyeable with a disperse dye at atmospheric pressure according to the present invention includes a step for producing a polyester by condensation polymerization of a dicarboxylic acid or an ester-forming derivative thereof and a diol or an ester-forming derivative thereof in the presence of a condensation polymerization catalyst, and the production method is characterized in that the diol component containing three carbon chains and having a side chain is added prior to the commencement of the ester reaction so that the diol component containing three carbon chains and having a side chain accounts for 5 to 10 mol% of the total diol quantity in the polyester and that the polyethylene glycol is added so that the polyethylene glycol accounts for 2 to 4 wt% of the polyester composition. It is preferable that the produced polyester composition have ethylene terephthalate as its main repeating component.

The production method of the present invention to polymerize ethylene terephthalate as the main repeating component of a polyester composition dyeable with a disperse dye at atmospheric pressure incorporates a generally known ester exchange reaction or esterification reaction step and a condensation polymerization reaction step, followed by a pelletization step.

It is preferable that, in the ester exchange reaction of the production method for the polyester composition dyeable with a disperse dye at atmospheric pressure according to the present invention, the molar ratio between ethylene

glycol and dimethyl terephthalate (ethylene glycol/dimethyl terephthalate) be set around 1.5 to 2.5 as it makes it possible to suitably control the reaction speed of ester exchange and the generation of byproducts, such as diethylene glycol. Though any generally known catalyst may be used as the ester exchange reaction catalyst, an acetate or oxide of cobalt, magnesium or manganese, for instance, is advantageously used.

The esterification reaction of the production method for the polyester composition dyeable with a disperse dye at atmospheric pressure according to the present invention may be performed while continuously supplying a slurry of ethylene glycol and terephthalic acid mixed at a molar ratio (ethylene glycol/terephthalic acid) of 1.05 to 1.50 to the ester reaction tank. Alternatively, the esterification reaction may be carried out after adding the whole amounts of ethylene glycol and terephthalic acid to the ester reaction tank in advance. From the viewpoint of avoiding an impairment to the heat resistance of the polyester to be produced, the preferred method is to continuously add a slurry of ethylene glycol and terephthalic acid to the ester reaction tank, in which a low polymer is already present, or add a low polymer, ethylene glycol and terephthalic acid all at once prior to the commencement of the reaction. In either case, the esterification reaction catalyst may, for instance, be an acetate or oxide of cobalt, magnesium or manganese.

The condensation polymerization catalyst to be used in the production method for the polyester composition dyeable with a disperse dye at atmospheric pressure according to the present invention may be a generally known polymerization catalyst. Namely, an antimony compound, germanium compound or titanium compound may, for instance, be advantageously used.

In the production method for the polyester composition dyeable with a disperse dye at atmospheric pressure according to the present invention, a diol component containing three carbon chains and having a side chain is added prior to the commencement of the esterification reaction or ester exchange reaction, namely prior to the commencement of the ester reaction. Adding a diol component containing three carbon chains and having a side chain prior to the commencement of the ester reaction makes it possible to stabilize the amount copolymerized into the polyester composition dyeable with a disperse dye at atmospheric pressure to be obtained.

When 2-methyl-1,3-propanediol is used as a diol component containing three carbon chains and having a side chain as part of the production method for the polyester composition dyeable with a disperse dye at atmospheric pressure according to the present invention, 2-methyl-1,3-propanediol sometimes ends up being evaporated from the condensation polymerization reaction tank with ethylene glycol during the condensation polymerization reaction because of the closeness of its boiling point to that of ethylene glycol. To have the targeted amount of 2-methyl-1,3-propanediol copolymerized into the polymer, therefore, it is necessary to take into account the amount that will be evaporated away prior to adding 2-methyl-1,3-propanediol. The amount of 2-methyl-1,3-propanediol that will be evaporated with ethylene glycol during the condensation polymerization reaction also varies according to when it is added. If, for instance, 2-methyl-1,3-propanediol is added prior to the esterification reaction, about 15 wt% of 2-methyl-1,3-propanediol with respected to the amount added is evaporated during the condensation polymerization reaction. If, on the other hand, 2-methyl-1,3-propanediol is added sometime between the time the esterification reaction effectively ends and the time the condensation polymerization reaction begins, about 35 wt% of 2-methyl-1,3-propanediol with respected to the amount added is evaporated during the condensation polymerization reaction. It is therefore preferable that, when 2-methyl-1,3-propanediol is used, it be added prior to the commencement of the esterification reaction.

When an ethylene oxide adduct of 2-methyl-1,3-propanediol is used as a diol component containing three carbon chains and having a side chain as part of the production method for the polyester composition dyeable with a disperse dye at atmospheric pressure according to the present invention, hardly any evaporation with ethylene glycol occurs during the condensation polymerization reaction. Namely, an ethylene oxide adduct of 2-methyl-1,3-propanediol is preferable as it allows the targeted amount to be exactly copolymerized into the polymer and thus eliminates the need to add an extra amount. An ethylene oxide adduct of 2-methyl-1,3-propanediol exhibits stability in its copolymerized amount regardless of when it is added. Namely, an ethylene oxide adduct of 2-methyl-1,3-propanediol may, for instance, be added prior to the commencement of the esterification reaction or sometime between the time the esterification reaction effectively ends and the time the polymerization reaction begins, or even in the middle of the condensation polymerization reaction.

Such a diol component containing three carbon chains and having a side chain may be added using a generally known method. The diol component containing three carbon chains and having a side chain may be added after being heated or simply at room temperature. If the diol component containing three carbon chains and having a side chain is solid at room temperature, it could be dispersed in ethylene glycol or the like or changed into a liquid by heating above the melting point before adding. If the diol component containing three carbon chains and having a side chain is liquid, it could be added after diluting by dissolving it into ethylene glycol or some other solvent or simply without diluting.

In the production method for the polyester composition dyeable with a disperse dye at atmospheric pressure according to the present invention, the cyclic dimers expressed by chemical formulas (1) and (2) are adjusted to 0.35 wt% or less of the polyester composition. The content of those cyclic dimers can be kept low by adjusting the timing of when to add the diol component containing three carbon chains and having a side chain. Adding a diol component containing three carbon chains and having a side chain prior to the commencement of the esterification reaction or ester

exchange reaction makes the formation of cyclic dimers more difficult by causing the reaction between the dicarboxylic acid or an ester derivative thereof and the diol or an ester derivative thereof, to advance preferentially. If, on the other hand, it is added after the esterification reaction or ester exchange reaction is effectively concluded, as the diol or ester derivative thereof, has already taken part in the formation of a linear low polymer, making it more likely for the diol component containing three carbon chains and having a side chain and the dicarboxylic acid or ester derivative thereof, to react preferentially, cyclic dimers are easier to form.

The cyclic dimers contained in the polyester composition dyeable with a disperse dye at atmospheric pressure according to the present invention are prone to scatter into a steam ejector and other vacuum generating equipment during the condensation polymerization reaction. If cyclic dimers enter the vacuum circuit, the cyclic dimers clog up the circuit and threatens to cause a delay in polymerization reaction or a coloring of the polymer (a rise in b value). It may be possible to adopt condensation polymerization reaction conditions that suppress such scattering of cyclic dimers. Condensation polymerization reaction conditions encompass the heating rate and pressure reduction rate. The heating rate of the condensation polymerization reaction is preferably 0.2°C to 5.0°C, more preferably 0.2°C to 3.0°C, in terms of the rise in temperature per minute. The pressure reduction rate of the condensation polymerization reaction is preferably 7.5mmHg to 50mmHg, more preferably 8.5mmHg to 20mmHg, in terms of the fall in pressure per minute.

In the production method for the polyester composition dyeable with a disperse dye at atmospheric pressure according to the present invention, polyethylene glycol may be added at any chosen stage before the polyester composition reaches the predetermined degree of polymerization. In this regard, it is preferable that polyethylene glycol be uniformly dispersed in the polyester composition as it is susceptible to coloring when exposed to heat. It is therefore preferable that it be added sometime between the time the esterification reaction or ester exchange reaction effectively ends and the time the condensation polymerization reaction begins.

Further, the polyester composition dyeable with a disperse dye at atmospheric pressure according to the present invention is amenable to the incorporation of a disperse dye, while being excellent in dyeability and fiber structural stability. The polyester composition may also contain generally known additives within the bounds that do not undermine the purpose of the present invention. Examples include phosphoric acid, trimethyl phosphate and other heat resistant agents and titanium oxide, carbon black and other pigments, not to mention generally known antioxidants, color protection agents, light resistant agents, antistatic agents, ultraviolet absorber, and the like.

Polyester fibers may be produced from the polyester composition dyeable with a disperse dye at atmospheric pressure according to the present invention using a generally known method.

Polyester fibers of the present invention may take on a variety of cross sectional shapes, including circular, hollow core and multilobar (e.g. trilobal), and other modified shapes may also be freely chosen, thus allowing the best choice to be made according to each application.

Similarly, there are no specific limitations on the form of a polyester fiber, and long fiber and short fiber, for instance, are both acceptable. In the case of a long fiber, it may either be of the multifilament or monofilament type.

Polyester fibers of the present invention are excellent in dyeability with disperse dyes at atmospheric pressure, structural stability in terms of the dry thermal shrinkage rate and the like, as well as color tone stability in terms of fastness of oxidized nitrogen.

In the case of dyeing with, for instance, a black disperse dye (5% owf of Dianix Black S-R) at 95°C, polyester fibers of the present invention exhibit a same level of dyeability comparable to fibers comprising polyethylene terephthalate as dyed at 130°C, as they have recorded less than 16.5 in the L value (Hunter L value as measured by color-difference meter).

Polyester fibers of the present invention are also comparable to fibers comprising polyethylene terephthalate in terms of the dry thermal shrinkage rate (percentage change in the fiber length of unstretched yarn from before to after a 160°C heat treatment), an indicator of fiber structural stability, as they have recorded less than 10%, making them excellent in versatility.

Polyester fibers of the present invention are also comparable to fibers comprising polyethylene terephthalate in terms of the delayed shrinkage rate (percentage change in the fiber length of unstretched yarn from before to after the passage of time of 200 hours), another indicator of fiber structural stability, as they have recorded less than 1.5%, again making them excellent in versatility.

Polyester fibers of the present invention exhibit only a small color tone change over time. It is generally known that a polyester produced by copolymerizing polyethylene glycol has a hindered phenolic antioxidant (e.g. IR1010 manufactured by Ciba Specialty Chemicals) added to moderate the fall in heat resistance caused by polyethylene glycol. However, such a hindered phenolic antioxidant itself causes a structural change by reacting with oxidized nitrogen in the atmosphere, and the polyester sometimes takes on a yellowish tone due to this structural change. For this reason, a polyester produced by copolymerizing polyethylene glycol is prone to turn yellowish (yellowing) with its commercial value potentially diminished. In contrast, fibers produced from the polyester composition dyeable with a disperse dye at atmospheric pressure according to the present invention does not exhibit such yellowing as it can minimize the amount of a hindered phenolic antioxidant added, thanks to the limited range of the amount of polyethylene glycol as described

above.

Polyester fibers of the present invention may be turned into formed articles, or at least parts thereof, according to their applications or shapes.

Examples of formed articles at least partially incorporating polyester fibers of the present invention include woven fabrics, knitted fabrics, nonwoven fabrics, piles and paddings, while fibers suitable for a combined use with polyester fibers of the present invention encompass natural fibers, such as cotton, hemp, wool and silk, reclaimed fibers, such as rayon and cupra, semisynthetic fibers, such as acetate, and synthetic fibers, such as nylon, polyester (e.g. polyethylene terephthalate, polypropylene terephthalate and polybutylene terephthalate), polyacrylonitrile, and polyvinyl chloride.

Typical applications in which polyester fibers of the present invention are at least partially used for formed articles are those which require dyeability with disperse dyes at atmospheric pressure. Examples include fasteners, uniforms and automotive interior finishing materials. Such atmospheric-pressure dispersed dye dyeable polyester fibers are advantageous as they are resistant to yellowing or structural change. In this regard, the applications of polyester fibers of the present invention are not limited to the above.

It follows that fibers excellent in dyeability with disperse dyes at atmospheric pressure and structural stability in terms of the dry thermal shrinkage rate and the like, as well as color tone stability in terms of oxidized nitrogen fastness and the like, can only be obtained through a polyester composition dyeable with a disperse dye at atmospheric pressure that contains a diol component containing three carbon chains and having a side chain by 5 to 10 mol% and has a polyethylene glycol content of 2 to 4 wt% of the polyester composition to be obtained, as well as a production method therefor.

Examples

The present invention will now be described in greater detail with reference to examples.

Values of physical properties quoted in the examples were measured using the methods described below.

(1) Polymer viscosity (solution viscosity)

A specimen was dissolved in ortho-chlorophenol, and measurements were made at 25°C using an Ostwald viscometer.

(2) Color tone of polyester composition

Measurements were made using a color-difference meter (manufactured by Suga Test Instruments Co., Ltd., SM color computer model SM-T45) in terms of a Hunter b value.

(3) Content of diol component containing three carbon chains and having a side chain in polyester composition

A specimen was hydrolyzed with monomethanol amine, followed by dilution with 1,6-hexane diol/methanol and neutralization with terephthalic acid. A measurement was then taken from the peak area of a gas chromatographic chart.

(4) Cyclic dimer content of polyester composition

A specimen was dissolved in trifluoro acetic acid, and measurements were made using an H-NMR spectrometer (model AV-600 manufactured by Bruker, measurement temperature 300K, number of scans 128). The proton peak (A) of benzene rings attributed to cyclic dimers was found at around 7.8 to 8.0 ppm, while the proton peak (B) of benzene rings attributed to a straight-chain polyester composition was found at around 8.0 to 8.3 ppm. The ratio of integrated areas (A/B) of those proton peaks, defined as the cyclic dimer content of the polyester composition, was rounded off to the nearest third decimal place and evaluated against the following criteria:

Cyclic dimer content 0.35 wt% or less: ○
Cyclic dimer content 0.36 wt% or more: ×

(5) Dry thermal shrinkage rate

A 1-m ten-loop hank was taken from a package of unstretched yarn and subjected to a 0.029cN/dtex load, with the hank length measured (L0). The hank was then heat-treated in an oven at 160°C for 15 minutes without a load, and, after cooling by fan, the hank length was measured under a load of 0.029cN/dtex (L1). A measurement was taken three

times and, after averaging, the dry thermal shrinkage rate at 160°C was calculated using equation 1, with an evaluation performed against the criteria below.

$$\text{Dry thermal shrinkage rate} = (L0-L1)/L0\times 100 \text{ (Equation 1)}$$

L0: Fiber length before heat treatment, L1: Fiber length after heat treatment
Dry thermal shrinkage rate less than 10%: ○
Dry thermal shrinkage rate 10% or more: ×

(6) Delayed shrinkage rate

A yarn was sampled from a package of unstretched yarn and immediately subjected to a load of $2\times 10^{-3}$cN/dtex, with the fiber length (L2) measured within two minutes of sampling. The yarn was left to stand for 200 hours under atmospheric conditions consisting of a temperature of 25°C ±2°C and a relative humidity of 65% ±10%, followed by the measurement of the fiber length (L3). Three measurements were taken and averaged, and the delayed shrinkage rate was calculated using equation 2.

$$\text{Delayed shrinkage rate} = (L2-L3)/L2\times 100 \text{ (Equation 2)}$$

L2: Fiber length measured within two minutes of sampling, L3: Fiber length measured after passage of 200 hours
Delayed shrinkage rate less than 1.5%: ○
Delayed shrinkage rate 1.5% or more: ×

(7) Dyeability with disperse dyes (L value)

Textured yarns obtained using methods described under examples were knitted into cylindrical knitted fabrics. Each fabric was dyed for 60 minutes in a 95°C heated aqueous solution comprising 5% owf of Dianix Black S-R (a black disperse dye), 1g/L of a level dyeing agent and 1g/L of an acetic acid with a bath ratio 1:20, with its color tone L value measured using the method described in (2) above and evaluated against the criteria below.

L value less than 16.5: ○
L value 16.5 or more: ×

(8) Oxidized nitrogen fastness

Textured yarns obtained using methods described under examples were knitted into cylindrical knitted fabrics. Each fabric was evaluated for fastness against the criteria below using the method specified in JIS L0801.

Grade 4: ○
Grade 3 or below: ×

[Example 1]

(Ester exchange reaction)

To an reaction tank equipped with a rectifying column, ethylene glycol and dimethyl terephthalate were added to an ethylene glycol/dimethyl terephthalate molar ratio of 2.0, and 2-methyl-1,3-propanediol was also added to a concentration of 8.0 mol% of the resulting low polymer, with cobalt acetate tetrahydrate further added to a concentration of 400 ppm of the resulting low polymer. After that, the reaction tank was heated from 140°C to 235°C to evaporate methanol and perform an ester exchange reaction, and a 1750kg low polymer was obtained. The ester exchange reaction rate was 98%.

(Esterification reaction/condensation polymerization reaction)

With the above low polymer present in the ester reaction tank, 2-methyl-1,3-propanediol was added to a concentration of 8.0 mol% of the resulting low polymer (With 9.2 mol% of 2-methyl-1,3-propanediol added, an equivalent of 1.2 mol% was evaporated during the condensation polymerization reaction. This amount was equivalent to 15 wt% of the 2-methyl-1,3-propanediol initially added.), and an ethylene glycol/terephthalic acid slurry with a molar ratio of 1.15 was added over about 3 hours. While removing the generated water through evaporation, the temperature of the reaction tank was kept constant at 245°C to perform an esterification reaction. The reaction time was 4 hours, and the esterification reaction rate was 98%.

Of the obtained low polymer, 1,750kg was left in the ester reaction tank, with 1,000kg transferred to the condensation polymerization reaction tank. After the transfer of the low polymer was completed, phosphoric acid was added to a phosphorus-equivalent concentration of 50 ppm of the resulting polyester composition, and, 7 minutes later, antimony trioxide was added to an antimony-equivalent concentration of 330 ppm of the resulting polyester composition, cobalt acetate was added to a concentration of 90 ppm of the resulting polyester composition and IR1010 was added to a polyester-equivalent concentration of 1000 ppm of the resulting polyester composition. Five minutes later, polyethylene glycol with a number average molecular weight of 1000 was added to a concentration of 3.0 wt% of the resulting polyester composition, and again 5 minutes later, titanium oxide was added to a concentration of 0.3 wt% of the resulting polyester composition. When the introduction of all additives was completed, the temperature of the condensation polymerization reaction tank was 230°C. After that, a steam ejector was operated to start reducing the internal pressure of the condensation polymerization reaction tank to start condensation polymerization reaction. From an initial 760mmHg, the pressure of the polymerization reaction tank was reduced at a rate of 13.8mmHg/min, falling to about 1.5mmHg 55 minutes later. The pressure was then kept constant until the target polymer viscosity was reached. The polymerization reaction tank was heated at a rate of 0.46°C/min, and the condensation polymerization reaction temperature reached 285°C two hours after the reaction began. This temperature was kept constant until the condensation polymerization reaction was concluded. When the target polymer viscosity was reached, the condensation polymerization reaction was concluded, and nitrogen was injected into the condensation polymerization reaction tank to complete the pressure reduction. The condensation polymerization reaction time was 3 hours 0 minutes. Next, the polymer left inside the condensation polymerization reaction tank was discharged in a strand state and cooled using nitrogen, followed immediately by cutting to obtain polyester pellets. The polymer viscosity of the obtained polyester pellets was 0.66, with a b value of 5.5, a 2-methyl-1,3-propanediol content of 8.0 mol% and a cyclic dimer content of 0.25 wt% also achieved. The condensation polymerization reaction took place stably with no pressure fluctuations during the reaction, and the polymer quality was excellent.

(Spinning method)

After drying, the polyester composition was served to a spinning machine set to a spinning temperature of 265°C, a die heater temperature of 270°C and a die depth (distance between the die surface and the cooling starting point) of 35mm and discharged as molten polyester at a rate of 29.3g/min through a die nozzle featuring 24 round holes, each measuring 0.30mm in diameter and 0.50mm in depth. The discharged thread was cooled and solidified using a cooling chimney by way of cooling air flowing at 35m/min and was, while being consolidated, applied with an oil solution (with a pure oil content of 0.7 wt% of the fiber weight) using a piece of oiling equipment located 1.7m below the die. It was then taken up onto a first godet roll with a circumferential speed of 2750m/min, and second godet roll to obtain a cheese package containing a 12 kg roll of 110-dtex 24-filament unstretched yarn. The circumferential speed of the take-up machine was 2745m/min. The dry thermal shrinkage rate and delayed shrinkage rate of the obtained unstretched yarn were measured and evaluated using the methods described in (5) and (6) above. Recording a dry thermal shrinkage rate of 8.6% and a delayed shrinkage rate of 1.1%, the fiber structure was stable.

(Stretching and false-twisting method)

The obtained unstretched yarn was subjected to a stretching and false-twisting process at a heating temperature of 180°C, a stretching speed of 400m/min, a DY ratio of 1.55 and a draw ratio of 1.7 using a disk false-twisting machine, and a 56-dtex 24-filament textured yarn was obtained. Here, the DY ratio is the D/Y ratio, i.e. the ratio of the circumferential speed of the false-twist applying apparatus (D) to the speed of the stretching roller (Y).

(Dyeing treatment method)

A cylindrical knitted fabric was produced from the obtained textured yarn, and subjected to dyeing treatment and oxidized nitrogen fastness evaluations using the methods described in (7) and (8) above. With its L value and oxidized nitrogen fastness measured to be 15.3 and grade 4, respectively, the obtained cylindrical knitted fabric was excellent in dyeability and oxidized nitrogen fastness.

[Examples 2 to 13]

A polyester composition was obtained in the same manner as working example 1, except that polymerization conditions, in terms of the type and content of a diol component containing three carbon chains and having a side chain and the type (number average molecular weight) and content of polyethylene glycol, were changed as specified in Table 1 or 2. The obtained polyester composition was spun, dyed and evaluated using the same methods as working example 1. Every polyester composition enjoyed a stable pressure during the condensation polymerization reaction and exhibited excellent polymer quality. The quality of the resulting fiber was also excellent.

[Examples 14 and 15]

A polyester composition was obtained in the same manner as working example 1, except that condensation polymerization reaction conditions, in terms of the heating rate and pressure reduction rate, were changed as specified in Table 2. The obtained polyester composition was spun, dyed and evaluated using the same methods as working example 1. Every polyester composition enjoyed a stable pressure during the condensation polymerization reaction and exhibited excellent polymer quality. The quality of the resulting fiber was also excellent.

[Example 16]

(Esterification reaction/condensation polymerization reaction)

A polyester composition was obtained in the same manner as working example 1, except that polymerization conditions, in terms of the type and content (Since an ethylene oxide adduct of 2-methyl-1,3-propanediol is not removed through evaporation together with ethylene glycol, all the amount added is incorporated into the polymer. For this reason, only 6 mol% was added of the polyester composition to be obtained.) of a diol component containing three carbon chains and having a side chain and the type (number average molecular weight) and content of polyethylene glycol, were changed as specified in Table 2. The obtained polyester composition was spun, dyed and evaluated using the same methods as working example 1. The polyester composition enjoyed a stable pressure during the condensation polymerization reaction and exhibited excellent polymer quality. The quality of the resulting fiber was also excellent.

[Table 1]

| | Conditions | | | | | | Results | | | | | | | | | | | | |
|---|---|---|---|---|---|---|---|---|---|---|---|---|---|---|---|---|---|---|---|
| | Diol component containing three carbon chains and having a side chain | | Polyethylene glycol | | Condensation polymerization reaction | | Polymerization time hr:min | Physical properties of polymer | | | | Physical properties of yarn | | | | Dyeability with disperse dyes (L value) | | Oxidized nitrogen fastness | |
| | Type | Content | Content | Number average molecular weight | Heating rate | Pressure reduction rate | | IV | b value | Cyclic dimers wt% | | Dry thermal shrinkage rate % | | Delayed shrinkage rate % | | | | | |
| | | mol% | wt% | | °C/min | rate mmHg/min | | | | | Evaluation | | Evaluation | | Evaluation | | Evaluation | | Evaluation |
| Working example 1 | 2-methyl-1,3-propanediol | 8.0 | 3.0 | 1000 | 0.46 | 13.8 | 3:00 | 0.66 | 5.5 | 0.25 | ○ | 8.6 | ○ | 1.1 | ○ | 15.3 | ○ | Grade 4 | ○ |
| Working example 2 | 2-methyl-1,3-propanediol | 8.0 | 2.5 | 1000 | 0.46 | 13.8 | 2:55 | 0.66 | 4.8 | 0.24 | ○ | 8.5 | ○ | 1.1 | ○ | 15.5 | ○ | Grade 4 | ○ |
| Working example 3 | 2-methyl-1,3-propanediol | 8.0 | 3.5 | 1000 | 0.46 | 13.8 | 3:05 | 0.68 | 6.2 | 0.25 | ○ | 8.6 | ○ | 1.1 | ○ | 15.2 | ○ | Grade 4 | ○ |
| Working example 4 | 2-methy\|-1,3-propanediol | 7.0 | 2.5 | 1000 | 0.46 | 13.8 | 2:50 | 0.66 | 4.5 | 0.22 | ○ | 8.3 | ○ | 1.1 | ○ | 15.8 | ○ | Grade 4 | ○ |
| Working example 5 | 2-methyl-1,3-propanediol | 9.0 | 3.5 | 1000 | 0.46 | 13.8 | 3:15 | 0.68 | 6.5 | 0.30 | ○ | 8.9 | ○ | 1.3 | ○ | 14.6 | ○ | Grade 4 | ○ |
| Working example 6 | 2-methyl-1,3-propanediol | 5.5 | 2.5 | 1000 | 0.46 | 13.8 | 2:40 | 0.66 | 3.9 | 0.18 | ○ | 7.4 | ○ | 0.8 | ○ | 16.2 | ○ | Grade 4 | ○ |

(continued)

| | Conditions | | | | | | Results | | | | | | | | | | | | |
|---|---|---|---|---|---|---|---|---|---|---|---|---|---|---|---|---|---|---|---|
| | Diol component containing three carbon chains and having a side chain | | Polyethylene glycol | | Condensation polymerization reaction | | Polymerization time | Physical properties of polymer | | | | Physical properties of yarn | | | | Dyeability with disperse dyes (L value) | | Oxidized nitrogen fastness | |
| | Type | Content | Content | Number average molecular weight | Heating rate | Pressure reduction rate | | IV | b value | Cyclic dimers | | Dry thermal shrinkage rate | | Delayed shrinkage rate | | | | | |
| | | mol% | wt% | | °C/min | rate mmHg/min | hr:min | | | wt% | Evaluation | % | Evaluation | % | Evaluation | | Evaluation | | Evaluation |
| Working example 7 | 2-methyl-1,3-propanediol | 9.5 | 3.5 | 1000 | 0.46 | 13.8 | 3:20 | 0.70 | 6.7 | 0.33 | ○ | 9.4 | ○ | 1.3 | ○ | 14.5 | ○ | Grade 4 | ○ |
| Working example 8 | 2-methyl-1,3-propanediol | 5.0 | 2.0 | 1000 | 0.46 | 13.8 | 2:35 | 0.66 | 3.4 | 0.16 | ○ | 7.0 | ○ | 0.7 | ○ | 16.4 | ○ | Grade 4 | ○ |

[Table 2]

| | Conditions | | | | | | Results | | | | | | | | | | | | |
|---|---|---|---|---|---|---|---|---|---|---|---|---|---|---|---|---|---|---|---|
| | Diol component containing three carbon chains and having a side chain | | Polyethylene glycol | | Condensation polymerization reaction | | Polymerization time hr:min | Physical properties of polymer | | | | Physical properties of yarn | | | | Dyeability with disperse dyes (L value) | | Oxidized nitrogen fastness | |
| | Type | Content mol% | Content wt% | Number average molecular weight | Heating rate °C/min | Pressure reduction rate mmHg/min | | IV | b value | Cyclic dimers wt% | Evaluation | Dry thermal shrinkage rate % | Evaluation | Delayed shrinkage rate % | Evaluation | | Evaluation | | Evaluation |
| Working example 9 | 2-methyl-1,3-propanediol | 10.0 | 4.0 | 1000 | 0.46 | 13.8 | 3:25 | 0.70 | 7.0 | 0.34 | ○ | 9.8 | ○ | 1.4 | ○ | 14.2 | ○ | Grade 4 | ○ |
| Working example 10 | 2,2-dimethyl-1,3-propanediol | 8.0 | 3.0 | 1000 | 0.46 | 13.8 | 3:00 | 0.66 | 5.6 | 0.23 | ○ | 8.6 | ○ | 1.1 | ○ | 15.3 | ○ | Grade 4 | ○ |
| Working example 11 | 2-phenyl-1,3-propanediol | 8.0 | 3.0 | 1000 | 0.46 | 13.8 | 2:55 | 0.66 | 5.5 | 0.26 | ○ | 8.7 | ○ | 1.3 | ○ | 15.5 | ○ | Grade 4 | ○ |
| Working example 12 | 2-methyl-1,3-propanediol | 8.0 | 3.0 | 2000 | 0.46 | 13.8 | 3:00 | 0.66 | 5.6 | 0.25 | ○ | 8.7 | ○ | 1.1 | ○ | 15.4 | ○ | Grade 4 | ○ |
| Working example 13 | 2-methyl-1,3-propanediol | 8.0 | 3.0 | 4000 | 0.46 | 13.8 | 2:55 | 0.66 | 5.7 | 0.25 | ○ | 8.9 | ○ | 1.2 | ○ | 15.5 | ○ | Grade 4 | ○ |

(continued)

| | Conditions | | | | | | Results | | | | | | | | | | | | |
|---|---|---|---|---|---|---|---|---|---|---|---|---|---|---|---|---|---|---|---|
| | Diol component containing three carbon chains and having a side chain | | Polyethylene glycol | | Condensation polymerization reaction | | Polymerization time hr:min | Physical properties of polymer | | | | Physical properties of yarn | | | | Dyeability with disperse dyes (L value) | | Oxidized nitrogen fastness | |
| | Type | Content mol% | Content wt% | Number average molecular weight | Heating rate °C/min | Pressure reduction rate mmHg/min | | IV | b value | Cyclic dimers wt% | Evaluation | Dry thermal shrinkage rate % | Evaluation | Delayed shrinkage rate % | Evaluation | | Evaluation | | Evaluation |
| Working example 14 | 2-methyl-1,3-propanediol | 8.0 | 3.0 | 1000 | 0.46 | 8.4 | 3:15 | 0.66 | 6.4 | 0.23 | ○ | 8.5 | ○ | 1.0 | ○ | 15.5 | ○ | Grade 4 | ○ |
| Working example 15 | 2-methyl-1,3-propanediol | 8.0 | 3.0 | 1000 | 2.17 | 30.3 | 2:30 | 0.66 | 3.8 | 0.29 | ○ | 8.8 | ○ | 1.3 | ○ | 15.4 | ○ | Grade 4 | ○ |
| Working example 16 | Ethylene oxide adduct of 2-methyl-1,3-propanediol | 6.0 | 3.0 | 1000 | 0.46 | 13.8 | 2:55 | 0.66 | 5.4 | 0.19 | ○ | 8.3 | ○ | 1.0 | ○ | 15.2 | ○ | Grade 4 | ○ |

[Comparative Example 1]

A polyester composition was polymerized using the same method as working example 1, except that polymerization conditions were changed as specified in Table 3, and the resulting polyester composition was spun, dyed and evaluated. Disperse dye dyeability (L value) was inferior.

[Comparative Example 2]

A polyester composition was polymerized using the same method as working example 1, except that polymerization conditions were changed as specified in Table 3, and the resulting polyester composition was spun, dyed and evaluated. The dry thermal shrinkage rate, delayed shrinkage rate and disperse dye dyeability (L value) were inferior.

[Comparative Example 3]

A polyester composition was polymerized using the same method as working example 1, except that polymerization conditions were changed as specified in Table 3, and the resulting polyester composition was spun, dyed and evaluated. The polymer contained large amounts of cyclic dimers, and the condensation polymerization reaction was a little slow. The dry thermal shrinkage rate, delayed shrinkage rate and disperse dye dyeability (L value) were also inferior.

[Comparative Example 4]

A polyester composition was polymerized using the same method as working example 1, except that polymerization conditions were changed as specified in Table 3, including the omission of polyethylene glycol, and the resulting polyester composition was spun, dyed and evaluated. Disperse dye dyeability (L value) was inferior.

[Comparative Example 5]

A polyester composition was polymerized using the same method as working example 1, except that polymerization conditions were changed as specified in Table 3, including the omission of polyethylene glycol, and the resulting polyester composition was spun, dyed and evaluated. The polymer contained large amounts of cyclic dimers, and, with the condensation polymerization reaction pressure temporarily rising, the condensation polymerization reaction was extremely slow, leading to an inferior polymer color tone (b value). The dry thermal shrinkage rate and delayed shrinkage rate were also inferior.

[Comparative Example 6]

A polyester composition was polymerized using the same method as working example 16, except that polymerization conditions were changed as specified in Table 3, including the omission of polyethylene glycol, and the resulting polyester composition was spun, dyed and evaluated. Disperse dye dyeability (L value) was inferior.

[Comparative Example 7]

A polyester composition was polymerized using the same method as working example 1, except that polymerization conditions were changed as specified in Table 3, including the omission of 2-methyl-1,3-propanediol, and the resulting polyester composition was spun, dyed and evaluated. Disperse dye dyeability (L value) was inferior.

[Comparative Example 8]

A polyester composition was polymerized using the same method as working example 1, except that polymerization conditions were changed as specified in Table 3, including the omission of 2-methyl-1,3-propanediol, and the resulting polyester composition was spun, dyed and evaluated. The dry thermal shrinkage rate, delayed shrinkage rate, disperse dye dyeability (L value) and oxidized nitrogen fastness were inferior.

[Comparative Example 9]

(Ester exchange reaction)

To a reaction tank equipped with a rectifying column, ethylene glycol and dimethyl terephthalate were added

to an ethylene glycol/dimethyl terephthalate molar ratio of 2.0, and cobalt acetate tetrahydrate was also added to a concentration of 400 ppm of the resulting low polymer. After that, the reaction tank was heated from 140°C to 235°C to evaporate methanol and perform an ester exchange reaction, and a 1750kg low polymer was obtained. The ester exchange reaction rate was 98%.

(Esterification reaction/condensation polymerization reaction)

With the above low polymer present in the ester reaction tank, an ethylene glycol/terephthalic acid slurry with a molar ratio of 1.15 was added over about 3 hours. While removing the generated water through evaporation, the temperature of the reaction tank was kept constant at 245°C to perform an esterification reaction. The reaction time was 4 hours, and the esterification reaction rate was 98%. Of the obtained low polymer, 750kg was left in the ester reaction tank, with 1,000kg transferred to the condensation polymerization reaction tank. After the transfer of the low polymer was completed, phosphoric acid was added to a phosphorus-equivalent concentration of 50 ppm of the resulting polyester composition, and, 7 minutes later, antimony trioxide was added to an antimony-equivalent concentration of 330 ppm of the resulting polyester composition, cobalt acetate was added to a concentration of 90 ppm of the resulting polyester composition and IR1010 was added to a polyester-equivalent concentration of 1000 ppm of the resulting polyester composition. Five minutes later, 2-methyl-1,3-propanediol was added to a concentration of 8.0 mol% of the resulting low polymer (With 10.8 mol% of 2-methyl-1,3-propanediol added, an equivalent of 2.8 mol% was evaporated during the condensation polymerization reaction. This amount was equivalent to 35 wt% of the 2-methyl-1,3-propanediol initially added.), and again 5 minutes later, polyethylene glycol with a number average molecular weight of 1000 was added to a concentration of 3.0 wt% of the resulting polyester composition, followed by the addition, yet again 5 minutes later, of titanium oxide to a concentration of 0.3 wt% of the resulting polyester composition. When the introduction of all additives was completed, the temperature of the condensation polymerization reaction tank was 225°C. After that, a steam ejector was operated to start the reduction of the internal pressure of the condensation polymerization reaction tank to start condensation polymerization reaction. From an initial 760mmHg, the pressure of the polymerization reaction tank was reduced at a rate of 13.8mmHg/min, falling to about 1.5mmHg 55 minutes later. After that, the pressure was kept constant until the target polymer viscosity was reached. The polymerization reaction tank was heated at a rate of 0.46°C/min, and the condensation polymerization reaction temperature reached 290°C two hours after the reaction began. This temperature was kept constant until the condensation polymerization reaction was concluded. When the target polymer viscosity was reached, the condensation polymerization reaction was concluded, and nitrogen was injected into the condensation polymerization reaction tank to complete the pressure reduction. The condensation polymerization reaction time was 3 hours 15 minutes. Next, the polymer left inside the condensation polymerization reaction tank was discharged in a strand state and cooled using nitrogen, followed immediately by cutting to obtain polyester pellets. The polymer viscosity of the obtained polyester pellets was 0.66, with a b value of 6.3, a 2-methyl-1,3-propanediol content of 8.0 mol% and a cyclic dimer content of 0.37 wt% also achieved. Pressure fluctuations were observed during the condensation polymerization reaction, and the polymerization reaction was a little slow. The same spinning and stretching & false-twisting methods as working example 1 were applied, and, as shown in Table 3, the quality of the resulting fiber was inferior in terms of the dry thermal shrinkage rate and delayed shrinkage rate.

[Table 3]

| | Conditions | | | | | | Results | | | | | | | | | | | | |
|---|---|---|---|---|---|---|---|---|---|---|---|---|---|---|---|---|---|---|---|
| | Diol component containing three carbon chains and having a side chain | | Polyethylene glycol | | Condensation polymerization reaction | | Polymerization time hr:min | Physical properties of polymer | | | | Physical properties of yarn | | | | Dyeability with disperse dyes (Lvalue) | | Oxidized nitrogen fastness | |
| | Type | Content mol% | Content wt% | Number average molecular weight | Heating rate °C/min | Pressure reduction rate mmHg/min | | IV | b value | Cyclic dimers wt% | Evaluation | Dry thermal shrinkage rate % | Evaluation | Delayed shrinkage rate % | Evaluation | | Evaluation | | Evaluation |
| Comparative Example 1 | 2-methyl-1,3-propanediol | 8.0 | 1.0 | 1000 | 0.46 | 13.8 | 2:45 | 0.66 | 4.3 | 0.24 | ○ | 8.5 | ○ | 1.2 | ○ | 19.7 | × | Grade 4 | ○ |
| Comparative Example 2 | 2-methyl-1,3-propanediol | 4.0 | 6.0 | 1000 | 0.46 | 13.8 | 3:00 | 0.70 | 6.3 | 0.14 | ○ | 17.3 | × | 2.5 | × | 16.5 | × | Grade 4 | ○ |
| Comparative Example 3 | 2-methyl-1,3-propanediol | 12.0 | 1.0 | 1000 | 0.46 | 13.8 | 3:10 | 0.69 | 5.4 | 0.39 | × | 14.5 | × | 1.8 | × | 16.8 | × | Grade 4 | ○ |
| Comparative Example 4 | 2-methyl-1,3-propanediol | 8.0 | - | - | 0.46 | 13.8 | 2:40 | 0.66 | 3.4 | 0.24 | ○ | 9.7 | ○ | 1.4 | ○ | 24.8 | × | Grade 4 | ○ |
| Comparative Example 5 | 2-methyl-1,3-propanediol | 15.0 | - | - | 0.46 | 13.8 | 3:40 (slow) | 0.66 | 9.5 | 0.44 | × | 16.2 | × | 2.2 | × | 16.2 | ○ | Grade 4 | ○ |
| Comparative Example 6 | Ethylene oxide adduct of 2-methyl-1,3-propanediol | 9.5 | - | - | 0.46 | 13.8 | 3:05 | 0.66 | 5.2 | 0.30 | ○ | 8.8 | ○ | 1.3 | ○ | 18.9 | × | Grade 4 | ○ |

(continued)

| | Conditions | | | | | | Results | | | | | | | | | | | | |
|---|---|---|---|---|---|---|---|---|---|---|---|---|---|---|---|---|---|---|---|
| | Diol component containing three carbon chains and having a side chain | | Polyethylene glycol | | Condensation polymerization reaction | | Polymerization time hr:min | Physical properties of polymer | | | | Physical properties of yarn | | | | Dyeability with disperse dyes (Lvalue) | | Oxidized nitrogen fastness | |
| | Type | Content mol% | Content wt% | Number average molecular weight | Heating rate °C/min | Pressure reduction rate mmHg/min | | IV | b value | Cyclic dimers wt% | Evaluation | Dry thermal shrinkage rate % | Evaluation | Delayed shrinkage rate % | Evaluation | | Evaluation | | Evaluation |
| Comparative Example 7 | - | - | 3.5 | 1000 | 0.46 | 13.8 | 2:25 | 0.69 | 4.0 | Not detected | ○ | 9.5 | ○ | 1.3 | ○ | 28.8 | × | Grade 4 | ○ |
| Comparative Example 8 | - | - | 7.0 | 1000 | 0.46 | 13.8 | 2:45 | 0.72 | 5.6 | Not detected | ○ | 15.3 | × | 2.6 | × | 16.5 | × | Grade 3 or below | × |
| Comparative Example 9 | 2-methyl-1,3-propanediol(*) | 8.0 | 3.0 | 1000 | 0.46 | 13.8 | 3:15 (slow) | 0.66 | 6.3 | 0.37 | × | 13.6 | × | 1.7 | × | 15.3 | ○ | Grade 4 | ○ |

(*) The addition of 2-methyl-1,3-propanediol was performed prior to the condensation polymerization reaction.

## Claims

1. A polyester composition dyeable with a disperse dye at atmospheric pressure which comprises a polyester containing a dicarboxylic acid, diol and polyethylene glycol and composed mainly of ethylene terephthalate as main repeating component; the polyester containing a diol component containing three carbon chains and having a side chain; the diol component accounting for 5 to 10 mol% of the total diol content; and the content of the polyethylene glycol and the content of cyclic dimers being 2 to 4 wt% and 0.35 wt% or less, respectively, in the polyester composition.

2. A polyester composition dyeable with a disperse dye at atmospheric pressure as described in claim 1, wherein the diol component containing three carbon chains and having a side chain is 2-methyl-1,3-propanediol.

3. A polyester composition dyeable with a disperse dye at atmospheric pressure as described in either claim 1 or 2 also comprising a cyclic dimer having a structure as expressed by chemical formula (1) below:

[Chemical formula 1]

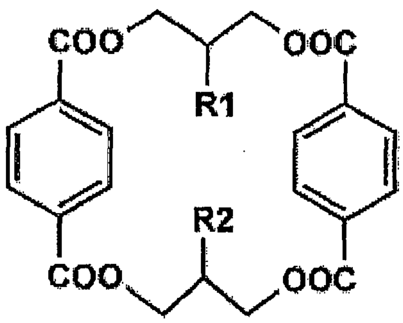

··· (1)

wherein, R1 and R2 are a hydrocarbon group with a carbon number of 1 to 6, a phenyl group, or an aryl group.

4. A polyester fiber comprising a polyester composition dyeable with a disperse dye at atmospheric pressure as described in any of claims 1 to 3.

5. A formed article produced by using, at least partially, a fiber as described in claim 4.

6. A production method for a polyester composition dyeable with a disperse dye at atmospheric pressure comprising a step for producing a polyester by condensation polymerization of a dicarboxylic acid or an ester-forming derivative thereof and a diol or an ester-forming derivative thereof in the presence of a condensation polymerization catalyst, **characterized in that** the diol component containing three carbon chains and having a side chain is added prior to the commencement of the ester reaction so as to account for 5 to 10 mol% of the total diol quantity in the polyester and that the polyethylene glycol is added so as to account for 2 to 4 wt% of the polyester composition.

## INTERNATIONAL SEARCH REPORT

International application No.
PCT/JP2013/051585

A. CLASSIFICATION OF SUBJECT MATTER
*C08L67/02*(2006.01)i, *C08G63/183*(2006.01)i, *C08L71/02*(2006.01)i, *D01F6/84* (2006.01)i

According to International Patent Classification (IPC) or to both national classification and IPC

B. FIELDS SEARCHED

Minimum documentation searched (classification system followed by classification symbols)
C08L67/00-67/03, C08G63/00-63/91, C08L71/00-71/14, D01F6/00-6/96

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CA/REGISTRY(STN), JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 2000-54225 A (Toray Industries, Inc.), 22 February 2000 (22.02.2000), entire text (Family: none) | 1-6 |
| A | JP 2004-277987 A (Dairen Chemical Corp.), 07 October 2004 (07.10.2004), entire text & US 2004/0204560 A1 & TW 231322 B | 1-6 |
| A | JP 11-29625 A (Mitsubishi Rayon Co., Ltd.), 02 February 1999 (02.02.1999), entire text (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 February, 2013 (20.02.13) | 05 March, 2013 (05.03.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/051585

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-323658 A (Mitsubishi Rayon Co., Ltd.), 26 November 1999 (26.11.1999), entire text (Family: none) | 1-6 |
| A | JP 2006-503078 A (E.I. Du Pont de Nemours & Co.), 26 January 2006 (26.01.2006), entire text & US 2004/0072983 A1 & WO 2004/033410 A1 & CA 2501346 A & KR 10-2005-0057633 A & CN 1703391 A & AU 2003279961 A & MX PA05003725 A & TWB 00I315303 | 1-6 |
| A | JP 2-38421 A (Toray Industries, Inc.), 07 February 1990 (07.02.1990), entire text (Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI238421 B
- JP HEI11350251 B
- JP 2004277987 A